# EUROPEAN PATENT APPLICATION

(11) **EP 2 109 253 A1**
(43) Date of publication of application: **14.10.2009**
(21) Application number: 08849683.1
(22) Date of filing: 13.11.2008
(51) Int. Cl.: H04L 12/24

(54) **A LICENSE IMPLEMENTATION METHOD, DEVICE AND SYSTEM OF SHARING THE EXCHANGE NODE**

(30) Priority: 13.11.2007 CN 200710166468
(71) Applicant: Huawei Technologies Co., Ltd., Longgang District, Shenzhen Guangdong 518129 (CN)
(72) Inventor: YU, Jiwan, Guangdong 518129 (CN)
(74) Representative: Kreuz, Georg Maria
(86) International application number: PCT/CN2008/073042
(87) International publication number: WO 2009/062448

(57) **Abstract**

A method, device and system for implementing a license for a shared switching node are provided so that multiple operators can share the switching node. The method includes: disassembling a received public license file into a plurality of license information corresponding to the operators according to the operators' sharing policies; configuring each of the plurality of license information corresponding to the operators within the allowable range of the public license file; and distributing the plurality of configured license information to a switching node associated with the operators. The method provided in embodiments of the present invention may meet the independence principle of the license server and the policy that only one license file is distributed to a switching node.

## Description

### Field of the Invention

The present invention relates to communication technologies, and in particular, to a method, device and system for implementing a license for a shared switching node.

### Background of the Invention

Traditionally, the capacity of a communication device is controlled by hardware. Operators may obtain desired capacities by purchasing a different number of racks and boards. However, the operators may run a smaller office with fewer investments. With software, capacity control policies may be more flexible, and control methods may be extended to some special functions. Thus, user costs may be saved and different requirements of users may be met. For example, a license may control the product service capacity and optional software functions through authorization. Currently, for a single user, the resources of a switching node are managed by applying for a license file from a vendor and distributing the license to the switching node to activate the license file.

In current access networks, however, users are unevenly distributed in terms of physical access locations, and the construction of communication networks requires huge investments of users in the initial phase. But, only a few terminal users may access the networks. For the purpose of cost allocation, the networking idea of sharing the access network or switching node among multiple operators is proposed. Sharing among multiple operators is a mechanism in which user access under different operators is supported by a same device and switching node resources are shared by multiple users.

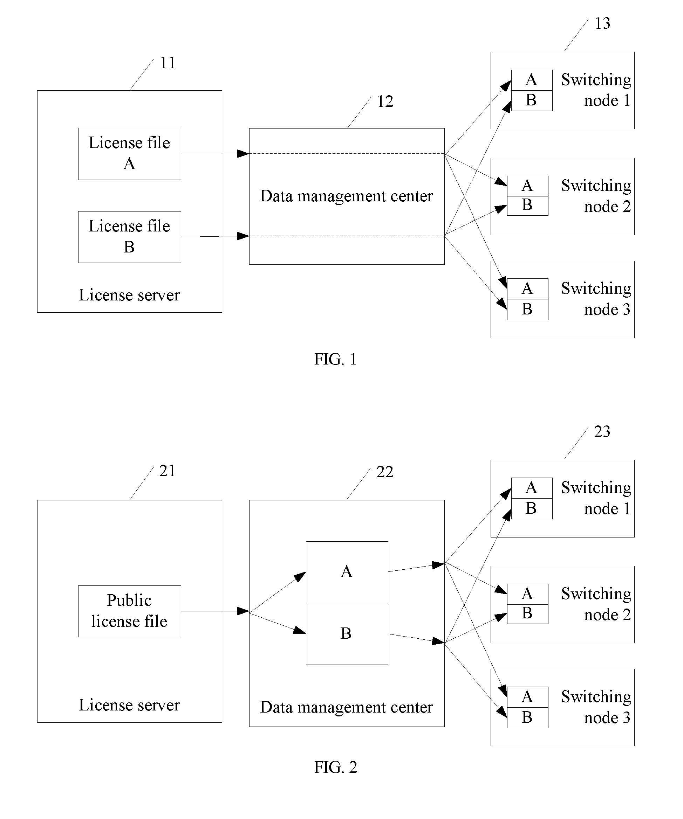

FIG. 1 is a schematic diagram of a method for implementing a license for a shared switching node by multiple operators in the prior art. As shown in FIG. 1, a license server 11 pre-allocates independent license files A and B for operators A and B respectively; a data management center 12 decrypts and checks the license files A and B by using target codes provided by the license server. During the activation of the license, the data management center calls a decrypting module provided by the license server to store the license files A and B in a memory and distributes the license files to a switching node 13.

In the prior art, it needs to distribute multiple license files to a switching node, such as license files A and B. The inventor finds that the prior art does not meet the policy of distributing only one license file to a switching node.

### Summary of the Invention

According to the present invention a method, device and system for implementing a license for a shared switching node are provided.

As a first aspect of the invention the method for implementing a license for a shared switching node includes:
disassembling a received public license file into a plurality of license information according to operators' sharing policy, where each of the plurality of license information corresponds to an operator;
configuring each of the plurality of license information within an allowable range of the public license file; and
distributing the plurality of configured license information to a switching node associated with the operators.

As a second aspect of the invention the data management center device includes:
a file receiving unit, adapted to receive a public license file;
an information disassembling unit, adapted to disassemble the received public license file into a plurality of license information according to the operators' sharing policy, where each of the plurality of license information corresponds to an operator;
an information configuring unit, adapted to configure a license information corresponding to an operator within an allowable range of the public license file; and
an information distributing unit, adapted to distribute the configured license information to a switching node associated with the operator.

As a third aspect of the invention the telecommunication system includes:
a license server, adapted to distribute a public license file to a data management center device;
the data management center device, adapted to disassemble a received public license file into a plurality of license information according to operators' sharing policy, where each of the plurality of license information corresponds to an operator; configure a license information corresponding to an operator within an allowable range of the public license file; and distribute the configured license information to a switching node associated with the operator.

In the implementation forms of the present invention, only one public license file is required. The public license file is disassembled into public license information according to the operators' sharing policies, and the license information associated with each operator is configured and distributed in the allowable range of the public license file to activate the license information. Thus, resources of the switching node may be shared by multiple operators, without any special processing on the license file by the license server, which meets the independence principle of the license server. In addition, the vendor needs to distribute only one public license file, which meets the policy of distributing only one license file to a switching node. To sum up, the technical solution provided in embodiments of the present invention may be easily extended in actual applications.

### Brief Description of the Drawings

For better a better understanding of the present invention the following refers to the accompanying drawings. It is apparent that these drawings show some embodiments of the present invention only.

FIG. 1 is a schematic diagram of a method for implementing a license for a shared switching node in the prior art;

FIG. 2 shows a structure of a telecommunication system provided in an embodiment of the present invention;

FIG. 3 shows a structure of a data management center device provided in an embodiment of the present invention; and

FIG. 4 is a flowchart of a method for implementing a license for a shared switching node in an embodiment of the present invention.

### Detailed Description of the Invention

Through analysis, the inventor finds the following problem concerning the method shown in FIG. 1. Although the method complies with the license security control mechanism of the system, the license server needs to distribute multiple license files with unique attributes of each operator to implement sharing among multiple operators. Thus, the license server needs to perform some special processing on the license files. For example, it makes a same equipment serial number (ESN) in multiple license files, which does not meet the independence principle of the license server. In addition, because each license server may be sold to one operator only, a license server may distribute only one license file. However, the method shown in FIG. 1 requires the license server to distribute multiple license files, and requires the switching node to distribute multiple license files after the multiple license files distributed by the license server reach the switching node through the data management center. Thus, the method does not meet the policy of distributing only one license file to a switching node. The method shown in FIG. 1 is hard to extend in actual applications due to the preceding problem.

The following describes the technical solution of the present invention in detail with reference to the accompanying drawings and exemplary embodiments. These embodiments are some embodiments of the present invention only.

FIG. 2 shows a structure of a telecommunication system provided in an embodiment of the present invention. The telecommunication system includes a license server 21, a data management center device 22, and a switching node 23.

The license server 21 is adapted to distribute a public license file to the data management center device 22.

The data management center device 22 is adapted to disassemble the received public license file into a plurality of license information, each corresponding to an operator, according to different operators' sharing policies, configure a license information corresponding to an operator within the allowable range of the public license file, and distribute the configured license information to a switching node 23 associated with the operator.

The switching node 23 is adapted to receive the configured license information.

The running principle of the telecommunication system is as follows:

The license server is responsible for distributing a public license file, which is the unique license file that the vendor distributes to an operator purchasing a device; the license server configures and distributes the public license file to activate the public license file; and the license server maintains and manages resources of the switching node through the public license file. The license file includes a unique identification (ID), a functional switch, an application period and a use period of the license file, where the ID may be a serial number and the functional switch is used to determine whether rights to use related resources of a switching node are available.

The data management center device disassembles the received public license file into independent license information corresponding to each operator according to different operators' sharing policies. The data management center device also configures the license information and distributes the configured license information to each switching node, so that the switching node may be used.

A sharing policy may be as follows: All the sharing operators are classified into primary operators and secondary operators, and different operators may enjoy different rights, functions, and resources according to different sharing policies. Generally, operators purchasing the license server are primary operators, and other sharing operators are secondary operators. The primary operators are generally responsible for configuring, maintaining, and managing the license information. Alternatively, such operations may be undertaken by a third party specified by the primary operators and secondary operators. Other secondary operators sharing the resources of the switching node may have related rights to obtain related device capacities and required functions according to the sharing policies agreed upon by the primary operators and secondary operators.

After license information corresponding to an operator is activated, the operator may enjoy related device capacities and functions.

In conclusion, the telecommunication system may enable multiple operators to share a switching node through a public license file. Because only one public license file is required, the license server may distribute the public license file directly without performing special processing on the license file, which meets the independence principle of the license server. In addition, it is unnecessary to apply for multiple license files from the vendor, which meets the policy of distributing only one license file to a switching node

Furthermore, the public license file that the primary operators apply for the primary and secondary operators according to the sharing policies agreed upon by the primary operators and secondary operators is configured and distributed again by the data management center device, which may be processed flexibly according to different devices. Further, the solution needs to modify only the data management center device in the telecommunication system, and the interface between the data management center device and a large number of switching nodes remains unchanged. Thus, the influences and costs may be reduced. The format of the license file in this embodiment may be consistent with that of the license file not shared among operators, thus facilitating the management and maintenance of the license file.

To sum up, the telecommunication system may enable multiple operators to share a switching node without massive modifications to the existing network system. It may also be compatible with the existing telecommunication systems, thus saving costs. In addition, the telecommunication system can enable the operators to play different sharing roles, thus being easily extended.

For better understanding and implementation of embodiments of the present invention, the data management center device is hereinafter described in detail with reference to the accompanying drawing.

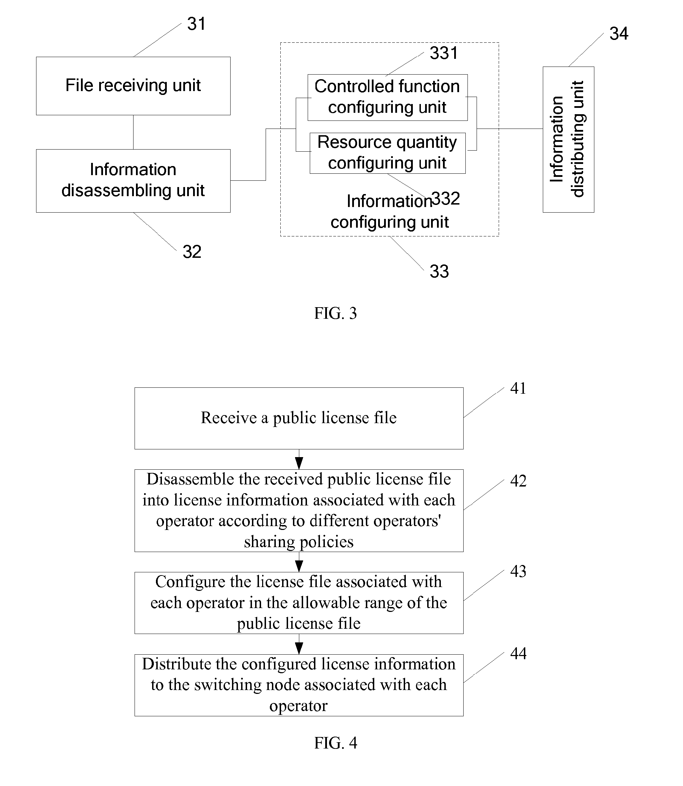

FIG. 3 shows a structure of a data management center device provided in an embodiment of the present invention. The data management center device includes a file receiving unit 31, an information disassembling unit 32, an information configuring unit 33, and an information distributing unit 34.

The file receiving unit 31 is adapted to receive a public license file.

The information disassembling unit 32 is adapted to disassemble the public license file received by the file receiving unit 31 into a plurality of license information according to the operators' sharing policies, wherein each of the plurality of license information corresponds to an operator.

The information configuring unit 33 is adapted to configure each of the plurality of license information corresponding to an operator within the allowable range of the public license file.

The information distributing unit 34 is adapted to distribute the plurality of license information configured by the information configuring unit 33 to a switching node or switching nodes associated with the operators.

The operators may be classified into primary operators and secondary operators, and enjoy different rights, functions and resources according to different sharing policies. Generally, operators purchasing the device are primary operators, and other sharing operators are secondary operators. The primary operators are generally responsible for configuring, maintaining, and managing the license information. Alternatively, such operations may be undertaken by a third party specified by the primary operators and secondary operators. Other secondary operators sharing the resources of the switching node may have related rights to obtain related device capacities and required functions according to the sharing policies agreed upon by both the primary operators and secondary operators.

As shown in FIG. 3, the information configuring unit 33 may include a controlled function configuring unit 331 and a resource quantity configuring unit 332.

The controlled function configuring unit 331 is adapted to configure each of the plurality of license information corresponding to an operator with controlled functions according to different sharing policies agreed upon by the primary and secondary operators.

The resource quantity configuring unit 332 is adapted to configure each of the plurality of license information corresponding to an operator with the quantity of resources that shall be allocated for each operator according to different sharing policies agreed upon by the primary and secondary operators.

It is easily understandable that FIG. 3 gives an example only and the information configuring unit 33 may include one of the controlled function configuring unit 331 and the resource quantity configuring unit 332.

It is understandable that the information configuring unit 33 may set related function units according to actual applications, so that the resources of the switching node shared by the operators can be better configured, managed and maintained.

The data management center device distributes the configured license information to an associated switching node, so that the operators can share resources of the switching node according to the agreed sharing policies.

When the operators need to share the resources of the switching node, the vendor does not need to distribute multiple license files according to the number of operators because the switching node requires only one license file. Thus, the license server does not need to perform special processing on multiple license files, which meets the independence principle of the license server. In addition, each operator does not need to apply for the license file several times when sharing the resources of the switching node. The license information may be flexibly configured according to different sharing policies of the operators, which meets different requirements of each operator for the resources of the switching node, the policy of distributing only one license file to a switching node and requirements of different sharing roles of each operator.

Furthermore, the interface between the data management center device and multiple switching nodes remains unchanged, which reduces influences on the network and saves costs.

To be better compatible with data management center devices that do not support sharing among the operators, a function attribute option is added to the license file to indicate whether to support sharing among the operators. A more user-friendly interactive interface may also be set, on which an administrator may configure license information of each operator flexibly. Thus, the operators may perform flexible processing according to their sharing roles and different resources of each device.

For better understanding and implementation of embodiments of the present invention, the following describes a method for implementing a license for a shared switching node in another embodiment of the present invention.

FIG. 4 is a flowchart of a method for implementing a license for a shared switching node in an embodiment of the present invention. The method includes the following steps:

Step 41: Receive a public license file.

During the specific implementation, the data management center device may be used to receive the public license file distributed by the license server, and maintain and manage the received license file.

The public license file carries license information that activates and manages a switching node. The public license file includes an ID that uniquely identifies the public license file (for example, a serial number), a functional switch for controlling related functions, and a creation date and a use period of the public license file.

All the operators need only one public license file, making it unnecessary to apply for license files time after time from the vendor.

Step 42: Disassemble the received public license file into a plurality of license information according to different operators' sharing policies, wherein each of the plurality of license information corresponds to an operator.

For example, if operators A and B share a switching node, and operator A purchases the license server device, the sharing policies may be as follows: Operator A acts as the primary operator and operator B acts as the secondary operator. Both operators A and B may enjoy related rights, functions and resources according to the agreed sharing policies; the primary operator may be responsible for the overall management and maintenance of the license file. Alternatively, such operations may be performed by a third party specified by both the primary and secondary operators.

In the data management center device, the public license file may be disassembled into license information corresponding to operators A and B according to the agreed sharing policies, where the license information may include IDs of operators A and B. For example, the public license file may be disassembled into license-A information corresponding to operators A and license-B information corresponding to operator B, where the license-A information includes an ID of operator A and the license-B information includes an ID of operator B; the functional switch may be set to on or off according to different IDs of the operators to configure resources for each operator according to their sharing policies.

Certainly, the quantity of resources configured for each operator is smaller than or equal to the total quantity of resources allocated by the public license file.

Step 43: Configure each of the plurality of license information corresponding to an operator within the allowable range of the public license file.

For example, the functional switch may be set to on or off according to the sharing policies to configure the controlled functions and enabled functions of each operator, or allowable quantity of resources for sharing among the operators, or the controlled functions and the allowable quantity of resources.

Step 44: Distribute the plurality of configured license information to the switching node or switching nodes associated with the operators.

For example, the license-A information is sent to a switching node associated with operator A, and the license-B information is sent to a switching node associated with operator B.

Each switching node may be identified according to the ESN when the license information is distributed to the switching nodes.

The license information associated with an operator is configured in the data management center and distributed to the associated switching node. After the license information is activated, the operator may enjoy the resources of the switching node.

It is apparent that when the resources of the switching node need to be shared, there is no need to distribute multiple license files according to the number of operators because only one license file is required in this method. Thus, no special processing needs to be performed on multiple license files, which meets the independence principle of the license server. In addition, the license information may be flexibly configured according to the sharing policies of the primary and secondary operators, which meets different requirements of each operator for the resources of the switching node, the policy that a license server device can apply for only one license file, and requirements of different sharing roles of each operator.

Furthermore, the interface between the data management center device and multiple switching nodes remains unchanged, which reduces influences on the network and saves costs.

To be better compatible with data management center devices that do not support sharing among the operators, a function attribute option is added to the license file to indicate whether to support sharing among the operators.

A more user-friendly interactive interface is set in the data management center, through which an administrator may flexibly configure the license information of each operator. Thus, the operators may perform flexible processing according to their sharing roles and different resources of each device.

It is understandable to those skilled in the art that all or part of the steps in the preceding method may be implemented by hardware instructed by computer program code, where the computer program code may be stored on a computer-readable storage medium. When the program is executed, the method may include:
disassembling a received public license file into a plurality of license information according to different operators' sharing policies, wherein each of the plurality of license information corresponds to an operator;
configuring a license information corresponding to an operator within an allowable range of the public license file; and
distributing the configured license information to a switching node associated with the operator.

Embodiments of the present invention provide a method, device and system for implementing a license for a shared switching node, which meets the independence requirement of the license server and the policy that only one license file is distributed to a switching node.

The preceding storage medium may be a read-only memory, a hard disk or a compact disk.

Detailed above are a method, device and system for implementing a license for a shared switching node. It is apparent that those skilled in the art can make various modifications and variations to the invention.

## Claims

1. A method for implementing a license for a shared switching node, **characterized by**:
disassembling (42) a received public license file into a plurality of license information according to operators' sharing policy, wherein each of the plurality of license information corresponds to an operator;
configuring (43) each of the plurality of license information within an allowable range of the public license file; and
distributing (44) the plurality of configured license information to a switching node (13; 23) associated with the operators.

2. The method according to claim 1, wherein the configuring each of the plurality of license information comprises:
configuring each of the plurality of license information with controlled functions and/or quantity of resources contained in the public license file.

3. The method according to claim 1 or 2, wherein the method is implemented by an operator of the operators or a third party specified by the operators.

4. The method according to claim 1, wherein the public license file comprises an indication which denotes whether sharing among the operators is supported.

5. A data management center device, **characterized by**:
a file receiving unit (31), adapted to receive a public license file;
an information disassembling unit (32), adapted to disassemble the received public license file into a plurality of license information according to the operators' sharing policy, wherein each of the plurality of license information corresponds to an operator;
an information configuring unit (33), adapted to configure each of the plurality of license information within an allowable range of the public license file; and
an information distributing unit (34), adapted to distribute the plurality of configured license information to a switching node associated with the operators.

6. The device according to claim 5, wherein the information configuring unit comprises:
a controlled function configuring unit (331), adapted to configureeach of the plurality of license information corresponding to an operator with controlled functions according to the operators' sharing policy; and/or
a resource quantity configuring unit (332), adapted to configure each of the plurality of license information corresponding to an operator with quantity of the resources allocated to each operator according to the operators' sharing policy.

7. A telecommunication system, **characterized by** a data management center device (12; 22) according to claim 5 or 6.

8. The telecommunication system according to claim 7, further comprising:
a license server, adapted to distribute a public license file to the data management center device; and
a switching node (13; 23), adapted to receive the configured license information distributed by the data management center device.
